# EUROPEAN PATENT APPLICATION

(11) **EP 4 556 768 A1**
(43) Date of publication of application: **21.05.2025**
(21) Application number: 23815329.0
(22) Date of filing: 28.06.2023
(51) Int. Cl.: F16K 15/14, A61J 9/04

(54) **AIR-RETURN VALVE AND AIR-RETURN CONTAINER**

(30) Priority: 12.07.2022 CN 202210820869; 12.07.2022 CN 202221875116 U
(71) Applicant: Beijing Shenchuang Century Information Technology Co., Ltd., Beijing 100022 (CN)
(72) Inventor: ZENG, Xianbing, Beijing 100022 (CN)
(74) Representative: Global IP Europe Patentanwaltskanzlei
(86) International application number: PCT/CN2023/103298
(87) International publication number: WO 2023/232153

(57) **Abstract**

Disclosed are an air-return valve and an air-return container. The air-return valve (1) comprises a valve body and an air path formed along an axis of the valve body. The valve body comprises a valve lip portion (3) and a valve body portion, wherein the valve lip portion is located above the valve body portion, and is a boss enclosed by a diaphragm, and the wall thickness of the valve lip portion is less than that of the valve body portion; and the air path penetrates the valve body portion, and the valve lip portion is provided with an air gap (2) connected to the air path. The air gap is closed when the interior of a container is not under a negative pressure; and the air gap is open when the interior of the container is under a negative pressure. The air-return container (13) comprises a container body and an air-return valve, wherein the container body is provided with a mounting hole (14), and the air-return valve is in interference fit with the mounting hole. The air-return valve can have a one-way communication effect, and makes air return to the air-return container to compensate for a negative pressure in the air-return container, such that a user easily ingests liquid in the air-return container; and when used as a milk bottle, the air-return container can prevent infantile flatulence and milk oxidation.

## Description

### TECHNICAL FIELD

The present invention belongs to the technical field of daily necessities, and specifically, the present invention relates to an air-return valve and an air-return container.

### BACKGROUND

Whether at home or outside, containers for holding liquids often appear in people's daily lives, such as water cups. With respect to open water cups, bottles are well sealed, which can prevent accidental liquid leakage and are more popular with people. However, bottles sometimes might not be satisfactory when used. Firstly, thermal expansion and cold contraction will cause negative pressure in the bottle, which makes it difficult to open the cap; secondly, when used with straws, nipples, etc., as the liquid in the bottle decreases, negative pressure will also appear inside the bottle, which is inconvenient to drink. Especially in the second case, the disadvantages are more obvious when the bottle is used with a nipple (as a milk bottle).

When used as a milk bottle, in order to balance the negative pressure, an air-return valve is often provided at the nipple to feed air into the milk bottle when the negative pressure occurs. Although it can solve the negative pressure problem, it will also introduce new problems. When used by an infant, the infant is easy to inhale bubbles and flatulence, and when bubbles pass through the milk, the milk will also be oxidized, causing nutrient loss.

There are some technical solutions in the prior art that can solve the problems of negative pressure, flatulence, and milk oxidation. For example, in the patent application document with application number 201420577388.7, submitted on September 30, 2014, and titled "a new type of anti-flatulence milk bottle", an anti-flatulence milk bottle is disclosed. It includes a bottle body, a silicone return air bottom plug, a handle, a nipple sleeve, a nipple, and a nipple cover. The upper end of the bottle body is provided with the bottle mouth of a male thread, and the bottom of the bottle body is provided with the bottom plug mouth that communicates with the outside of the bottle body. The silicone return air bottom plug is located in the bottom plug mouth of the bottom of the bottle body and is tightly sealed. At center of the silicone return air bottom plug and in the longitudinal direction, a return air gap that penetrates the head of the silicone return air bottom plug is provided. The handle is screwed at the bottle mouth of bottle body through the handle sleeve ring in the middle of itself. The nipple sleeve is arranged on the handle sleeve ring of the handle, and the nipple is arranged on the nipple sleeve. The nipple cover covers the upper end of the nipple.

In the above technical solution, a silicone return air bottom plug is arranged on the bottle body, so that the negative pressure can be balanced and the problems of flatulence and milk oxidation can be solved, however, a new problem is also introduced. The liquid in the bottle body is prone to leakage at the silicone return air bottom plug, and the sealing of the bottle body at the silicone return air bottom plug is poor. At the same time, the silicone return air bottom plug still has the problem of being difficult to plug in when inserted, and it is hard to install in place during installation.

### SUMMARY

In order to solve at least partially above problems, the present invention provides an air-return valve and an air-return container, and its technical solution is as follows:

An air-return valve for mounting on a container is provided, and the air-return valve comprises: a valve body and an air path formed along an axial direction of the valve body; the valve body comprising a valve lip portion and a valve body portion; the valve lip portion is positioned above the valve body portion; the valve lip portion is a boss enclosed with a diaphragm and a wall thickness of the valve lip portion is less than that of the valve body portion; and the air path passes through the valve body portion; the valve lip portion is provided with an air gap connected to the air path; the air gap is closed when interior of the container is under a non-negative pressure and is opened when the interior of the container is under the negative pressure.

For the above-mentioned air-return valve, it is further preferred that: a lower concave surface is provided on top surface of the valve body portion, and the valve lip portion is positioned on the lower concave surface.

For the above-mentioned air-return valve, it is further preferred that: the lower concave surface rises smoothly at periphery, until it reaches and connects with the top surface of the valve body portion.

For the above-mentioned air-return valve, it is further preferred that: the air gap is in a straight linear shape and is opened at top of the valve lip portion and is positioned on a symmetric plane of the valve lip portion.

For the above-mentioned air-return valve, it is further preferred that: the wall thickness of the top surface of the valve body portion decreases at the lower concave surface.

For the above-mentioned air-return valve, it is further preferred that: a first edge is at the interface between the valve lip portion and the lower concave surface, and the first edge is in form of enclosed ring.

For the above mentioned air-return valve, it is further preferred that: the valve body portion includes a valve head and a valve neck, and the valve neck is positioned below the valve head; and the valve head is used to carry the valve lip portion, and the valve neck is used to fit into a mounting hole on a container wall; an outer contour area of the valve head is larger than that of the valve neck when projected along the axial direction of the valve body.

For the above-mentioned air-return valve, it is further preferred that: a first rounded corner is provided at outer peripheral edge of top of the valve head.

For the above-mentioned air-return valve, it is further preferred that: a support body is further included; the support body is in the form of cylindrical shape and is used to support the valve neck, and an axis of the support body coincides with that of the valve neck.

For the above-mentioned air-return valve, it is further preferred that: the support body is integrally formed with the valve body; the support body is made of plastic material or rubber material, and the valve body is made of rubber material.

For the above-mentioned air-return valve, it is further preferred that: the support body is wrapped inside the valve neck, an outer diameter of the support body is smaller than that of the valve neck, and an inner diameter of the support body is larger than diameter of the air path.

For the above-mentioned air-return valve, it is further preferred that: the support body is positioned in the air path, and its outer peripheral surface fits with the valve neck; the outer diameter of the support body is larger than diameter of an air inlet of the air path, and an inner diameter of the support body is not larger than the diameter of the air inlet of the air path.

For the above-mentioned air-return valve, it is further preferred that: the support body is positioned in the air path, and the support body is a thickened ring for increasing wall thickness of the valve neck; inner diameter of the support body is not larger than diameter of an air inlet of the air path.

For the above-mentioned air-return valve, it is further preferred that: the valve body further includes a valve disc, and the valve disc is positioned below the valve neck; an outer contour area of the valve disc is larger than that of the valve neck when projected along the axial direction of the valve body.

For the above-mentioned air-return valve, it is further preferred that: a bottom surface of the valve disc is an arc-shaped surface, in which edge height is higher than center height.

For the above-mentioned air-return valve, it is further preferred that: a top surface of the valve disc is an arc-shaped surface, in which edge height is higher than center height.

For the above-mentioned air-return valve, it is further preferred that: at an interface of the valve neck and the valve head, the valve neck is provided with a second rounded corner, and the second rounded corner is used to be fitted with an inner edge of a mounting hole on a container wall.

For the above-mentioned air-return valve, it is further preferred that: at an interface of the valve neck and the valve disc, the valve neck is provided with a third rounded corner, and the third rounded corner is used to be fitted with an outer edge of a mounting hole on a container wall.

For the above-mentioned air-return valve, it is further preferred that: a periphery of bottom surface of the valve disc is provided with a fourth rounded corner.

For the above-mentioned air-return valve, it is further preferred that: a periphery of top surface of the valve disc is provided with a second edge.

For the above-mentioned air-return valve, it is further preferred that: the valve body portion and the valve lip portion are both cylinders; when projected along the axial direction of the valve body, an outer contour of the valve body portion is circular, and an outer contour of the valve lip portion is in form of oblong.

For the above-mentioned air-return valve, it is further preferred that: the valve lip portion is positioned on a symmetric plane of the valve body portion; and the air gap is positioned on a symmetric plane of the valve lip portion along the length direction.

For the above-mentioned air-return valve, it is further preferred that: an outer contour of the valve lip portion gradually decreases along the direction from the valve body portion to the valve lip portion.

For the above-mentioned air-return valve, it is further preferred that: an wall thickness of the valve lip portion gradually decreases along the direction from the valve body portion to the valve lip portion.

An air-return container comprises a container body and the air-return valve; a mounting hole is provided on the container body, and the air-return valve is interference-fitted with the mounting hole.

For the above-mentioned air-return container, it is further preferred that: the mounting hole is positioned at bottom of the container body, and the bottom of the container body is provided with an inwardly concave surface; an outer contour area of the valve disc of the air-return valve is smaller than an area of the inwardly concave surface of the container body.

It is noted that, compared with the prior art, the advantages and beneficial effects of the present invention are following:

With respect to the return valve of the present invention, when returning air, the external gas enters into the container after the air gap is opened by the external gas which pass through the air path. When not returning air, the air gap is at a closed state, with function of unidirectional guide and communication. The valve lip portion is a boss enclosed with the diaphragm, and is raised above the valve body portion and subjected to the concentrated pressure, which can ensure the reliability of the seal and prevent the liquid leakage from the air gap. The wall thickness of the valve lip portion is smaller than that of the valve body portion, so that the action of the valve lip portion is sensitive and reliable when returning air and sealing.

With respect to the return container of the present invention, the air-return valve is interference-fitted with the mounting hole, which enables returning air into the air-return container to compensate for the negative pressure in the air-return container, so as to facilitate the user to ingest the liquid in the air-return container. The air-return valve is mounted at the mounting hole, which functions as unidirectional guide and communication, which can not only compensate for the negative pressure in the air-return container, but also prevent the liquid in the air-return container from leakage. In addition, when the air-return container is used as a milk bottle, the air-return valve communicates with the air in the air-return container when compensating for the negative pressure in the air-return container. The air entering into the air-return container through the air-return valve would not pass through the milk. This can not only prevent the infant from flatulence due to inhalation of bubbles in the milk when feeding, but also prevent the milk from being oxidized due to mixing with bubbles.

### BRIEF DESCRIPTION OF THE DRAWINGS

Fig.1 is a schematic view of the structure of the air-return valve;
Fig.2 is a cross-sectional view of the air-return valve along the length direction of the valve lip portion;
Fig.3 is a cross-sectional view of the air-return valve along the direction perpendicular to the length direction of the valve lip portion;
Fig.4 is a schematic view of the connection of the air-return container.

Reference signs: 1-air-return valve; 2-air gap; 3-valve lip portion; 4-third rounded corner; 5-valve neck; 6-first rounded corner; 7-valve disc; 8-lower concave surface; 9-second rounded corner; 10-support body; 11-air inlet; 12-fourth rounded corner; 13-air-return container; 14-mounting hole; 15-first edge; 16-second edge.

### DETAILED DESCRIPTION OF THE EMBODIMENTS

The technical solution in embodiments of the present invention will be clearly and completely discussed below with reference to the drawings of the present invention. Obviously, the described embodiment merely is a part of embodiments of the present invention, not all of the embodiments. All other embodiments, which are on the basis of embodiments of the present invention, obtained by those skilled in the art without creative work, belong to the protection scope of the present invention.

In the description of the present invention, the terms "longitudinal", "transverse", "upper", "lower", "front", "back", "left", "right", "vertical", "horizontal", "top", "bottom" and the like indicate that the orientation or position relationship is based on the orientation or position relationship shown in the drawings, which is only for the convenience of explaining the present invention and does not require the present invention to be constructed and operated in a specific orientation, and therefore is not intended to limit the present invention. The terms "link" and "connect" used in the present invention should be interpreted broadly. For example, it can be a fixed connection or a detachable connection; it can be directly connected or indirectly connected through an intermediate component. For those skilled in the art, the specific meanings of the above terms can be understood according to specific circumstances.

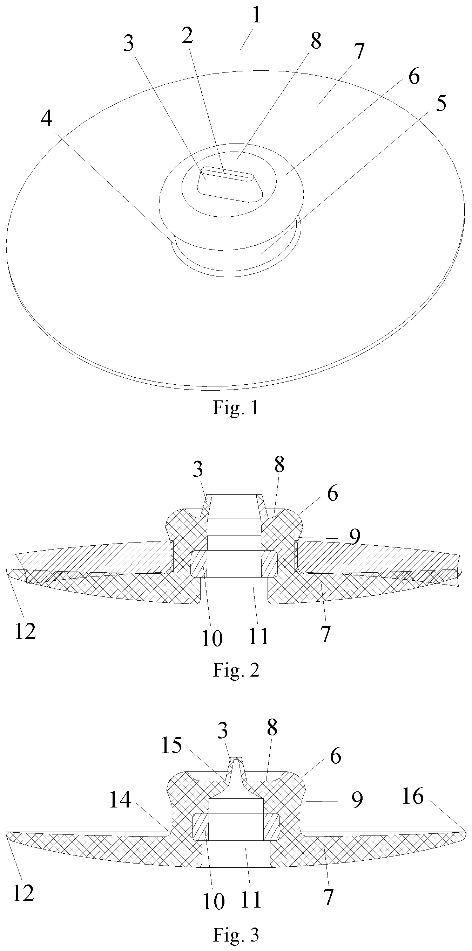

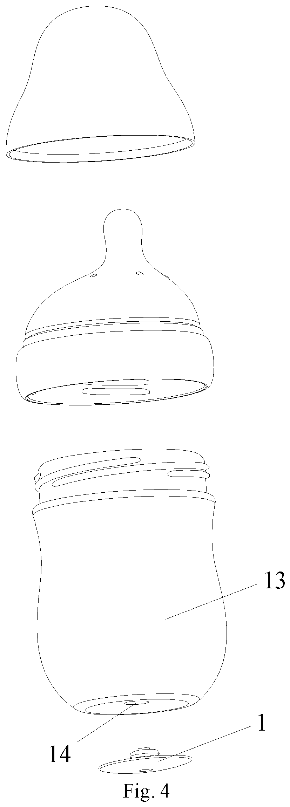

Please refer to Figs.1 to 4, Fig 1 is a schematic view of the structure of the air-return valve; Fig 2 is a cross-sectional view of the air-return valve along the length direction of the valve lip portion; Fig 3 is a cross-sectional view of the air-return valve along the direction perpendicular to the length direction of the valve lip portion; Fig 4 a schematic view of the connection of the air-return container. Among them, Fig 2 is a schematic view at the design period, and there is some interference. In practical use, the air-return valve will deform at the interference since it is capable of elastic deformation, and thus there is no interference in practical use.

As shown in Fig. 1, in one embodiment of the present invention, an air-return valve 1 is provided, which is used to be mounted on a container to return air and compensate for the negative pressure in the container. Specifically, the air-return valve 1 includes a valve body and an air path formed along the axial direction of the valve body (the direction of the axis of the valve body). The valve body includes a valve lip portion 3 and a valve body portion. The valve lip portion 3 is located above the valve body portion. The air path passes through the valve body portion. The valve lip portion 3 is provided with an air gap 2 connected to the air path. The air gap 2 is closed when the interior of the container is under non-negative pressure. When the user causes negative pressure (pressure is less than atmospheric pressure) in the container through sucking or other actions, the air gap is opened, and the air path is communicated to the container to intake air. Wherein, the valve lip portion 3 is a boss enclosed with a diaphragm, and the wall thickness of the valve lip portion 3 is less than the wall thickness of the valve body portion. "Non-negative pressure" means that the pressure in the container is not less than the atmospheric pressure, and it may be the status that the pressure at the air-return valve 1 is larger than the atmospheric pressure, e.g., the air-return valve 1 is immersed in the liquid in the container and the total pressure of the liquid and gas within the container at the air-return valve 1 is larger than the atmospheric pressure. It may also be the status that the pressure at the air-return valve 1 is equal to the atmospheric pressure, e.g., (1) the air-return valve 1 is immersed in the liquid in the container and the total pressure of the liquid and gas within the container at the air-return valve 1 is equal to the atmospheric pressure (at this time, the pressure of the gas within the container is less than the atmospheric pressure, but the part of it which is less than the atmospheric pressure is just compensated by the pressure of the liquid), and (2) the air-return valve 1 does not contact the liquid in the container and the gas pressure within the container is equal to the atmospheric pressure.

In this embodiment, when the air-return valve 1 is mounted on the container, the valve body portion is fitted with the container wall, and the valve lip portion 3 is positioned in the container. When returning air, the external gas enters into the container after the air gap 2 is opened by the external gas which pass through the air path. When not returning air, the air gap 2 is at a natural state (closed state), with function of unidirectional guide and communication. The valve lip portion is a boss enclosed with the diaphragm, and is raised above the valve body portion and subjected to the concentrated pressure, which can ensure the reliability of the seal and prevent the liquid leakage from the air gap 2. The wall thickness of the valve lip portion 3 is smaller than that of the valve body portion, so that the action of the valve lip portion is sensitive and reliable when returning air and sealing.

As shown in Fig. 1, in one embodiment of the present invention, the outer contour area of the valve lip portion 3 is smaller than that of the valve body portion, which can effectively reduce the volume ratio of the valve lip portion 3 to the valve body portion, thereby reducing the possibility of liquid leakage at the air gap 2.

Further, in this embodiment, the outer contour area of the valve lip portion 3 is 1/15 to 1/5 of that of the valve body portion, and most preferably is 1/10, which enables the valve lip portion 3 easy to act and prevent liquid leakage.

As shown in Figs. 1 and 2, in one embodiment of the present invention, a lower concave surface 8 is provided on the top surface of the valve body portion, and the valve lip portion 3 is positioned on the lower concave surface 8. Wherein, at the periphery, the lower concave surface 8 rises smoothly until it reaches and is connected with the top surface of the valve body portion. When the valve lip portion 3 is immersed in liquid, the lower concave surface 8 is subjected to the pressure from the periphery toward the center, and then tends to gather downward, so as to exert a force on the valve lip portion 3, thereby making the air gap 2 on the valve lip portion 3 to be closed more tightly, ensuring that no liquid leakage occurs at the air gap 2.

Further, in this embodiment, the wall thickness of the top surface of the valve body portion is reduced at the lower concave surface 8. When the lower concave surface 8 is subjected to the liquid pressure, it tends to sink, which would exert a force gathering from the periphery toward the center on the valve lip portion 3, ensuring the reliability of the closure of the air gap 2.

Further, in this embodiment, the interface of the valve lip portion 3 and the lower concave surface 8 is the first edge 15. The first edge 15 is in a closed ring shape, which facilitates the valve body portion to transmit the force to the valve lip portion 3. It is noted that, in this embodiment, for the convenient manufacturing of the product, the first edge 15 may also be rounded, and the radius of the rounded corner is extremely small, such as 0.1mm, 0.2mm, etc., without departing from the scope of the embodiment.

As shown in Fig. 3, in one embodiment of the present invention, the air gap 2 is in a straight linear shape, which is convenient for closing and opening. The air gap 2 is opened at the top of the valve lip portion 3 and is positioned on the symmetric plane of the valve lip portion 3, so that the forces on both sides of the air gap 2 could be balanced.

As shown in Fig. 2, in one embodiment of the present invention, the valve body portion includes a valve head and a valve neck 5, and the valve neck 5 is positioned below the valve head. When in use, the valve head is used to carry the valve lip portion 3, and the valve neck 5 is used to fit into the mounting hole 14 on the container wall. Wherein, the outer contour area of the valve head is larger than that of the valve neck 5 when projected along the axial direction of the valve body, so that the valve neck 5 can be squeezed into the mounting hole 14 and the valve head can cover the top of the mounting hole 14 to prevent liquid leakage therefrom.

Further, in this embodiment, a first rounded corner 6 is provided at the outer peripheral edge of the top of the valve head, which is convenient for plugging the air-return valve 1 into the mounting hole 14 for easy operation.

As shown in Figs. 2 and 3, in one embodiment of the present invention, a support body 10 is also included. The support body 10 is in the form of cylindrical shape and is used to support the valve neck 5. It provides a supporting function without hindering the gas flow of the air path. The axis of the support body 10 coincides with the axis of the valve neck 5, and can provide uniform support force for the valve neck 5 in the circumferential direction. The support body 10 may be made of plastic material, such as PPSU (Polyphenylene Sulfone resins), which provides a supporting function on the inner wall of the valve body. The support body 10 may also be made of rubber material, which is the same as that of the valve body. The valve body may be made of rubber material, such as silicone material, which is easy to elastically deform. When being mounded at the mounting hole 14, it can be squeezed between the support body 10 and the mounting hole 14 to avoid leakage. The support body 10 is integrally formed with the valve body, and they are single component in structure and cannot be detached, which can reduce the number of components and facilitate carrying and storage.

When in use, the air-return valve 1 can be connected to the mounting hole 14 by snapping connection, threading connection, etc., and can be removed from the container for easy cleaning and assembly. When the air-return valve 1 is mounted on the mounting hole 14, the design of the support body 10 can provide a supporting function and improve the anti-deformation ability of the valve body, so as to expediently mount the air-return valve 1 on the mounting hole 14; when the air-return valve 1 is mounted on the mounting hole 14, the support body 10 can squeeze the valve body between the support body 10 and the mounting hole 14, thereby ensuring the air-return valve 1 being reliably on the mounting hole 14, avoiding the liquid leakage and an accidental detachment of the air-return valve 1.

As an implementation of this embodiment, the support body 10 is wrapped inside the valve neck 5, the outer diameter of the support body 10 is smaller than that of the valve neck 5, and the inner diameter of the support body 10 is larger than the diameter of the air path. In this embodiment, the rubber encapsulation design is adopted, and the support body 10 is used as a bracket inside the valve neck 5 to support the valve neck 5.

As another implementation of this embodiment, the support body 10 is positioned in the air path, and the support body 10 fits with the valve neck 5 at the outer peripheral surface. The outer diameter of the support body 10 is larger than the diameter of the air inlet 11 of the air path. The fitting area between the support body 10 and the valve body is increased, and the support body 10 is restricted by the valve body at both ends in the axial direction, and thus the axial displacement would not occur. In the process of plugging the air-return valve 1 into the mounting hole 14 or pulling it out from the mounting hole 14, the support body 10 will not be separated from the valve body. The inner diameter of the support body 10 is not larger than the diameter of the air inlet 11 of the air path, and may be smaller than the diameter of the air inlet 11 of the air path, or may be equal to the diameter of the air inlet 11 of the air path, which is convenient for cleaning.

As another implementation of this embodiment, the support body 10 is positioned in the air path, and the support body 10 is a thickened ring. The inner diameter of the support body 10 is not larger than the diameter of the air inlet of the air path. The support body 10 is made of the same material as the valve body, and they are the single component in structure. As a part of the valve body used for thickening, it can improve the ability of the valve body to resist deformation in the radial direction. As a variation of the implementation, the support body 10 may also be made of the same material as the valve body and is separated from the valve body, that is, they are two components in structure.

As shown in Figs. 1 and 3, in one embodiment of the present invention, the valve body also includes a valve disc 7, and the valve disc 7 is positioned below the valve neck 5. Wherein, the outer contour area of the valve disc 7 is larger than that of the valve neck 5 when projected along the axial direction of the valve body. When in use, the valve disc 7 can be stuck at the bottom of the mounting hole 14 to prevent liquid leakage and prevent the air-return valve 1 from falling into the container through the mounting hole 14.

Further, in this embodiment, the top surface of the valve disc 7 is an arc-shaped surface, in which the edge height is higher than the center height. As an implementation, the valve disc 7 is gradually upturned from the center to the edge, and can be sucked onto the outer wall of the container when in use. The bottom surface of the valve disc 7 is an arc-shaped surface, and the edge height is higher than the center height. As an implementation, the valve disc 7 is gradually upturned from the center to the edge, which can prevent the valve disc 7 from being sucked on the plane on which the container is placed, and when the top surface of the valve disc 7 is sucked onto the outer wall of the container (the shape of the outer wall tends to a plane), the bottom surface of the valve disc 7 is synchronously deformed and tends to the plane, and the container is not easy to be tipped when placed.

Further, in this embodiment, the periphery of the top surface of the valve disc 7 is provided with a second edge 16, and the periphery of the bottom surface of the valve disc 7 is provided with a fourth rounded corner 12. When the container is picked up, the valve disc 7 can be sucked on the container wall, thereby ensuring that the air-return valve 1 would not fall off.

As shown in Fig. 2, in one embodiment of the present invention, at the interface of the valve neck 5 and the valve head, the valve neck 5 is provided with a second rounded corner 9. When in use, the second rounded corner 9 can be fitted with the inner edge of the mounting hole 14 on the container wall and press onto the inner edge of the mounting hole 14 to ensure the reliability of the seal. At the interface of the valve neck 5 and the valve disc 7, the valve neck 5 is provided with a third rounded corner 4. When in use, the third rounded corner 4 can be fitted with the outer edge of the mounting hole 14 on the container wall and press onto the outer edge of the mounting hole 14 to further ensure the reliability of the seal.

As shown in Figs. 1 and 3, in one embodiment of the present invention, the valve body portion and the valve lip portion 3 are both cylinders. When projected along the axial direction of the valve body, the outer contour of the valve body portion is circular, which could reduce costs. The outer contour of the valve lip portion 3 is in form of oblong (oblong refers to a shape formed by replacing the two wide sides of a rectangle with two semicircles), which can be better fitted with the air gap 2, making the actions bringing the air gap 2 to return air and close more accurate.

Furthermore, in this embodiment, the outer contour of the valve lip portion 3 gradually decreases along the direction from the valve body portion to the valve lip portion 3. During use, when the valve lip portion 3 is below the liquid level, the valve lip portion 3 is subjected to an oblique downward pressure at the periphery, which can force the air gap 2 to close, thereby ensuring that there is no leakage at the air gap 2. Along the direction from the valve body portion to the valve lip portion 3, the wall thickness of the valve lip portion 3 gradually decreases and reaches a minimum value at the air gap 2, which facilitates the opening and closing of the air gap 2 and makes the action more sensitive.

Furthermore, in this embodiment, the valve lip portion 3 is positioned on the symmetric plane of the valve body portion, and the air gap 2 is positioned on the symmetric plane of the valve lip portion 3 along the length direction, which has the advantage that the forces are balanced and the action would be accurate during use, as well as the production costs would be reduced.

As shown in Figs. 2 and 4, based on the above-mentioned air-return valve 1, the present invention also provides an air-return container 13. In one embodiment of the present invention, the air-return container 13 includes a container body and an air-return valve 1. Wherein, a mounting hole 14 is provided on the container body, and the air-return valve 1 is interference-fitted with the mounting hole 14.

In this embodiment, during the use of the air-return container 13, the air-return valve 1 can return air into the air-return container 13 to compensate for the negative pressure in the air-return container 13, so as to facilitate the user to ingest the liquid in the air-return container 13. In this embodiment, the mounting hole 14 may be positioned on the side wall of the container body, or on the top of the container body, or on the bottom of the container body. The air-return valve 1 is mounted at the mounting hole 14, which functions as unidirectional guide and communication, which can not only compensate for the negative pressure in the air-return container 13, but also prevent the liquid in the air-return container 13 from leakage. When the air-return container 13 is used as a milk bottle, the air-return valve 1 communicates with the air in the air-return container 13 when compensating for the negative pressure in the air-return container 13. The air entering the air-return container 13 through the air-return valve 1 would not pass through the milk, and thus would not mix with the milk. This can not only prevent the infant from flatulence due to inhalation of bubbles in the milk when feeding, but also prevent the milk from being oxidized due to mixing with bubbles.

As shown in Fig. 4, in one embodiment of the present invention, the mounting hole 14 is positioned at the bottom of the container body, and the bottom of the container body is provided with an inwardly concave surface. The air-return valve can effectively return air when the bottom of the container body is facing upward or the bottom is facing obliquely upward, e.g., when that is applied to a feeding bottle, the milk will not be oxidized, and the infant will not ingest bubbles. The outer contour area of the valve disc 7 of the air-return valve 1 is smaller than the area of the inwardly concave surface of the container body, and will not affect the stability of the container body when it is placed.

As shown in Figs. 1 to 4, the working process of the present invention is described in detail by the example that it is applied to a milk bottle as following:
When the air-return container 13 is used as a milk bottle, the container body is a bottle body. A nipple is mounted on the bottle body, and a dust cover is mounted on the nipple. A mounting hole 14 is provided at the bottom of the bottle body, and an air-return valve 1 is mounted on the mounting hole 14.

When the milk bottle is placed on a plane, the support body 10 is supported in the valve body; the valve head covers above the mounting hole 14; the valve neck 5 and the mounting hole 14 are interference-fitted, which ensures the reliability of the seal. The valve neck 5 is provided with a second rounded corner 9 and a third rounded corner 4, and two additional defense lines are provided on the basis of the interference-fit, which further ensures that the sealing meets the use requirements. The valve lip portion 3 and the valve head of the air-return valve 1 are positioned below the liquid surface and are immersed in the liquid. The liquid gives a downward pressure to the top surface of the valve head, so that the bottom surface of the valve head tends to sink downward, which would exert a force gathering from the periphery toward the center on the valve lip portion 3, ensuring the closure of the air gap 2 and preventing leakage. At the same time, the liquid also exert an oblique downward force to the valve lip portion 3 at the periphery, which further ensures the reliability of the closure of the air gap 2.

When feeding with the milk bottle, the bottom of the milk bottle is upward or tilted upward, and the air-return valve 1 is separated from the milk. When the air pressure in the milk bottle decreases, the air-return valve 1 can return air in time to ensure smooth feeding. The air-return valve 1 communicates with the air in the milk bottle when compensating for the negative pressure in the bottle body. The air entering the milk bottle through the air-return valve 1 would not pass through the milk, so that it would not mix with the milk. That can not only prevent the baby from flatulence due to inhaling bubbles in the milk when feeding, but also prevent the milk from being oxidized due to mixing with bubbles.

It can be known from technical common knowledge that the present invention can be implemented by other embodiments without departing from its spirit or necessary characteristics. Therefore, the above-mentioned disclosed embodiments are intended to be exemplary rather than limiting with all aspects. It is intended that the present invention include modifications and variations that are within the scope of the present invention and their equivalents.

## Claims

1. An air-return valve for mounting on a container, **characterized in that**, the air-return valve comprises:
a valve body and an air path formed along an axial direction of the valve body;
the valve body comprising a valve lip portion and a valve body portion;
wherein, the valve lip portion is positioned above the valve body portion; the valve lip portion is a boss enclosed with a diaphragm; a wall thickness of the valve lip portion is less than that of the valve body portion; and
the air path passes through the valve body portion; the valve lip portion is provided with an air gap thereon connected to the air path; the air gap is closed when interior of the container is under a non-negative pressure and is opened when the interior of the container is under the negative pressure.

2. The air-return valve according to claim 1, **characterized in that**,
a lower concave surface is provided on top surface of the valve body portion, and the valve lip portion is positioned on the lower concave surface.

3. The air-return valve according to claim 2, **characterized in that**,
the lower concave surface rises smoothly at periphery, until it reaches and connects with the top surface of the valve body portion.

4. The air-return valve according to claim 2, **characterized in that**,
the air gap is in a straight linear shape and is opened at top of the valve lip portion and is positioned on a symmetric plane of the valve lip portion.

5. The air-return valve according to claim 1, **characterized in that**,
the valve body portion includes a valve head and a valve neck, and the valve neck is positioned below the valve head; and
the valve head is used to carry the valve lip portion, and the valve neck is used to fit into a mounting hole on a container wall;
an outer contour area of the valve head is larger than that of the valve neck when projected along the axial direction of the valve body;
a first rounded corner is provided at outer peripheral edge of top of the valve head.

6. The air-return valve according to claim 1, **characterized in that**,
the valve body portion includes a valve head and a valve neck, and the valve neck is positioned below the valve head; and
the valve head is used to carry the valve lip portion, and the valve neck is used to fit into a mounting hole on the container wall; and
the valve body portion further includes a support body;
the support body is in the form of cylindrical shape and is used to support the valve neck, and a axis of the support body coincides with that of the valve neck.

7. The air-return valve according to claim 6, **characterized in that**,
the support body is integrally formed with the valve body; and
the support body is wrapped inside the valve neck, an outer diameter of the support body is smaller than that of the valve neck, and an inner diameter of the support body is larger than diameter of the air path; or
the support body is positioned in the air path, and its outer peripheral surface fits with the valve neck; the outer diameter of the support body is larger than diameter of an air inlet of the air path, and an inner diameter of the support body is not larger than the diameter of the air inlet of the air path.

8. The air-return valve according to claim 6, **characterized in that**,
the support body is positioned in the air path, and the support body is a thickened ring for increasing wall thickness of the valve neck; inner diameter of the support body is not larger than diameter of an air inlet of the air path.

9. The air-return valve according to claim 5, **characterized in that**,
the valve body further includes a valve disc, and the valve disc is positioned below the valve neck; and
an outer contour area of the valve disc is larger than that of the valve neck when projected along the axial direction of the valve body.

10. The air-return valve according to claim 9, **characterized in that**,
a bottom surface of the valve disc is an arc-shaped surface, in which edge height is higher than center height;
a top surface of the valve disc is an arc-shaped surface, in which edge height is higher than center height.

11. The air-return valve according to claim 9, **characterized in that**,
at an interface of the valve neck and the valve head, the valve neck is provided with a second rounded corner, and the second rounded corner is used to be fitted with an inner edge of a mounting hole on a container wall;
at an interface of the valve neck and the valve disc, the valve neck is provided with a third rounded corner, and the third rounded corner is used to be fitted with an outer edge of a mounting hole on a container wall;
and a periphery of bottom surface of the valve disc is provided with a fourth rounded corner;
and a periphery of top surface of the valve disc is provided with a second edge.

12. The air-return valve according to claim 5, **characterized in that**,
the valve body portion and the valve lip portion are both cylinders;
when projected along the axial direction of the valve body, an outer contour of the valve body portion is circular, and an outer contour of the valve lip portion is in form of oblong; and
the valve lip portion is positioned on a symmetric plane of the valve body portion;
and the air gap is positioned on a symmetric plane of the valve lip portion along the length direction.

13. The air-return valve according to claim 5, **characterized in that**,
an outer contour of the valve lip portion gradually decreases along the direction from the valve body portion to the valve lip portion;
a wall thickness of the valve lip portion gradually decreases along the direction from the valve body portion to the valve lip portion.

14. An air-return container, **characterized in that**, it comprises:
a container body, and the air-return valve according to claims 1-13; and
a mounting hole is provided on the container body, and the air-return valve is interference-fitted with the mounting hole.

15. The air-return container according to claim 14, **characterized in that**,
the mounting hole is positioned at bottom of the container body, and the bottom of the container body is provided with an inwardly concave surface;
an outer contour area of the valve disc of the air-return valve is smaller than an area of the inwardly concave surface of the container body.
